(19) **Europäisches Patentamt / European Patent Office / Office européen des brevets**

(11) **EP 4 469 324 B1**

(12) **FASCICULE DE BREVET EUROPÉEN**

(45) Date de publication et mention de la délivrance du brevet:
**08.10.2025 Bulletin 2025/41**

(21) Numéro de dépôt: **22836314.9**

(22) Date de dépôt: **01.12.2022**

(51) Classification Internationale des Brevets (IPC):
**B60W 30/16** (2020.01)   **B60W 40/04** (2006.01)

(52) Classification Coopérative des Brevets (CPC):
**B60W 30/16; B60W 40/04;** B60W 2554/4041; B60W 2554/406; B60W 2554/801; B60W 2554/802; B60W 2720/125

(86) Numéro de dépôt international:
**PCT/FR2022/052208**

(87) Numéro de publication internationale:
**WO 2023/139320 (27.07.2023 Gazette 2023/30)**

(54) **PROCÉDÉ ET DISPOSITIF DE CONTRÔLE D'UN SYSTÈME D'AIDE À LA CONDUITE EMBARQUÉ DANS UN VÉHICULE**

VERFAHREN UND VORRICHTUNG ZUR STEUERUNG EINES FORTSCHRITTLICHEN FAHRERASSISTENZSYSTEMS AN BORD EINES FAHRZEUGS

METHOD AND DEVICE FOR CONTROLLING AN ADVANCED DRIVER-ASSISTANCE SYSTEM LOCATED ON BOARD A VEHICLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **24.01.2022 FR 2200559**

(43) Date de publication de la demande:
**04.12.2024 Bulletin 2024/49**

(73) Titulaire: **Stellantis Auto SAS**
**78300 Poissy (FR)**

(72) Inventeurs:
• **VIVET, Luc**
  **75016 PARIS 16 (FR)**
• **REY, Alexis**
  **92210 ST CLOUD (FR)**
• **BAALLAL, Mouad**
  **92350 LE PLESSIS ROBINSON (FR)**

(74) Mandataire: **ESIP**
**Stellantis Auto SAS**
**Service REIP - YT800**
**43, rue Jean Pierre Timbaud**
**78300 Poissy (FR)**

(56) Documents cités:
GB-A- 2 587 739          KR-A- 20210 115 284
US-A1- 2018 222 486

## Description

### Domaine technique

La présente invention concerne les procédés et dispositifs de contrôle de système d'aide à la conduite, dit système ADAS, de véhicule. La présente invention concerne également un procédé et un dispositif de détermination d'un ou plusieurs paramètres de contrôle d'un véhicule. La présente invention concerne également un procédé et un dispositif de contrôle d'un véhicule, notamment un véhicule autonome.

### Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Parmi ces systèmes, le système de changement semi-automatique de voie de circulation, dit système SALC (de l'anglais « Semi-Automatic Lane Change ») a pour fonction première d'assister le conducteur d'un véhicule lorsque le conducteur souhaite changer de voie de circulation. A la détection de l'activation des clignotants d'un côté du véhicule pour indiquer son intention de changer de voie depuis une voie de circulation courante vers une voie de circulation cible du côté où les clignotants ont été activés par le conducteur, le système SALC opère le changement de voie après avoir effectués quelques contrôles.

Chacun de ces systèmes utilisent des données d'environnement du véhicule, obtenues par exemple de capteurs embarqués dans le véhicule, tels que des radars par exemple. Concernant le système ACC, ces informations d'environnement correspondent par exemple à la distance entre le véhicule équipé du système ACC et un véhicule circulant devant, à la vitesse (par exemple relative) du véhicule circulant devant, à l'accélération (ou à la décélération) du véhicule circulant devant et/ou à une vitesse limite réglementaire. Un tel véhicule circulant devant est appelé véhicule cible ou objet cible du système ACC. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Ces informations d'environnement sont particulièrement importantes pour un véhicule, par exemple pour améliorer la sécurité du véhicule en prenant en compte l'environnement qui l'entoure, notamment les autres véhicules.

Les données d'environnement utilisés pour ces systèmes sont cependant incomplètes et ne visent qu'une partie des véhicules localisés dans l'environnement du véhicule. Par exemple, le système ACC utilise essentiellement les données relatives à la présence d'un véhicule circulant devant le véhicule embarquant le système ACC. Le système SALC quant à lui utilise essentiellement les données relatives à la présence de véhicule dans la voie de circulation destination.

En outre, l'état de la technique est connu des documents KR20210115284A, US2018222486A1, GB2587739A.

### Résumé de l'invention

Un objet de la présente invention est de résoudre au moins l'un des problèmes de l'arrière-plan technologique décrit précédemment.

Un autre objet de la présente invention est d'améliorer la connaissance de l'environnement du véhicule pour un fonctionnement amélioré du ou des systèmes ADAS embarqués.

Selon un premier aspect, la présente invention concerne un procédé de contrôle d'un système d'aide à la conduite, dit système ADAS, embarqué dans un premier véhicule, le procédé comprenant les étapes suivantes :

- réception de données représentatives d'un environnement entourant le premier véhicule depuis au moins un capteur de détection d'objet embarqué dans le premier véhicule ;
- subdivision spatiale de l'environnement en une pluralité de zones, la pluralité de zones formant une matrice à 3 lignes et 3 colonnes centrée sur une zone centrale comprenant le premier véhicule, la matrice comprenant une colonne centrale entourée à gauche d'une colonne gauche et à droite d'une colonne droite ;
- pour chaque zone de la pluralité de zones, détermination d'un indicateur de présence représentatif de présence ou d'absence d'un deuxième véhicule en fonction du temps dans chaque zone en fonction des données ;
- détermination d'un premier indicateur de densité de véhicules associé à une première partie de la matrice en fonction des indicateurs de présence des zones comprises dans la première partie de la matrice et d'un deuxième indicateur de densité de véhicules associé à une deuxième partie de la matrice en fonction des indicateurs de présence des zones comprises dans la deuxième partie, la première partie comprenant la colonne centrale et la colonne gauche de la matrice et la deuxième partie comprenant la colonne centrale et la colonne droite de la matrice ;

- contrôle du système ADAS en fonction d'un troisième indicateur de densité de véhicules, le troisième indicateur de densité de véhicules étant fonction du premier indicateur de densité de véhicules et/ou du deuxième indicateur de densité de véhicules,

caractérisé en ce que pour chaque zone, l'indicateur de présence à un instant courant est égal à l'indicateur de présence à un instant précédant l'instant courant auquel est ajouté une première valeur déterminée positive lorsqu'un deuxième véhicule est détecté dans la zone à l'instant courant et auquel est ajouté une deuxième valeur déterminée négative lorsqu'un deuxième véhicule détecté dans la zone à l'instant précédent n'est plus détecté dans la zone à l'instant courant.

L'utilisation d'un indicateur de densité représentatif de la densité des véhicules dans l'environnement du premier véhicule permet d'adapter le contrôle des systèmes ADAS (par exemple les valeurs d'accélération de consigne) du premier véhicule en fonction de la densité de véhicules dans l'environnement immédiat du premier véhicule, en plus des paramètres classiquement utilisés pour le contrôle d'un tel système ADAS. Par exemple, lorsque la densité de véhicules circulant autour du premier véhicule est importante, l'accélération de consigne calculée par le système ACC peut être adaptée, par exemple réduite, par rapport à une accélération brute ou potentielle déterminée simplement à partir des paramètres dynamiques du premier véhicule et des paramètres dynamiques d'un véhicule cible circulant devant le premier véhicule. Cela permet d'améliorer le confort du conducteur et des passagers du premier véhicule en adaptant la dynamique du premier véhicule aux conditions de circulation autour du premier véhicule.

Selon une autre variante, la deuxième valeur déterminée correspond à l'opposée de la première valeur déterminée ou la valeur absolue de la première valeur déterminée est différente de la valeur absolue de la deuxième valeur déterminée.

Selon encore une variante, le premier indicateur de densité correspond à une moyenne des indicateurs de présence des zones comprises dans la première partie de la matrice et le deuxième indicateur de densité correspond à une moyenne des indicateurs de présence des zones comprises dans la deuxième partie de la matrice.

Selon une variante supplémentaire, chaque zone de la pluralité de zones possède une forme rectangulaire définie par une dimension longitudinale selon un axe longitudinal correspondant à un sens de déplacement du premier véhicule et par une dimension latérale selon un axe latéral orthogonal à l'axe longitudinal,

la dimension longitudinale des zones de la ligne centrale de la matrice comprenant la zone centrale correspondant à une somme d'une première distance déterminée et d'une deuxième distance déterminée, la première distance déterminée correspondant à une distance entre un point de référence du premier véhicule et une première limite entre la ligne centrale et une première ligne de la matrice située devant le premier véhicule, la deuxième distance déterminée correspondant à une distance entre le point de référence du premier véhicule et une deuxième limite entre la ligne centrale et une troisième ligne de la matrice située derrière le premier véhicule,
la dimension longitudinale des zones de la première ligne étant fonction d'une première durée temporelle, et
la dimension longitudinale des zones de la troisième ligne étant fonction d'une deuxième durée temporelle.

Selon encore une variante, le troisième indicateur correspond :

- à une moyenne du premier indicateur de densité et du deuxième indicateur de densité lorsqu'aucun clignotant du premier véhicule n'est activé ;
- au premier indicateur de densité uniquement lorsqu'un clignotant gauche du premier véhicule est activé ; et
- au deuxième indicateur de densité uniquement lorsqu'un clignotant droit du premier véhicule est activé.

Selon une variante additionnelle, le système ADAS correspond à un système de régulation adaptative de vitesse, dit système ACC, le procédé comprenant en outre une détermination d'une consigne d'accélération pour le premier véhicule en appliquant un coefficient déterminé à une accélération potentielle déterminée par le système ACC, le coefficient étant compris entre 0 et 1 et fonction du troisième indicateur de densité de véhicules suivant une fonction monotone décroissante du troisième indicateur.

Selon un deuxième aspect, la présente invention concerne un dispositif de contrôle d'un système d'aide à la conduite, dit système ADAS, d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

## Brève description des figures

D'autres caractéristiques et avantages de la présente invention ressortiront de la description des exemples de réalisation particuliers et non limitatifs de la présente invention ci-après, en référence aux figures 1 à 5 annexées, sur lesquelles :

[Fig. 1] illustre schématiquement un environnement d'un premier véhicule, selon un exemple de réalisation particulier de la présente invention ;

[Fig. 2] illustre une fonction représentant l'évolution d'un coefficient en fonction d'un indicateur de densité déterminé pour le premier véhicule de la figure 1, selon un exemple de réalisation particulier de la présente invention ;

[Fig. 3] illustre un diagramme représentant deux courbes d'accélération en fonction de l'indicateur de densité pour le premier véhicule de la figure 1, selon un exemple de réalisation particulier de la présente invention ;

[Fig. 4] illustre schématiquement un dispositif configuré pour contrôler un système ADAS du premier véhicule de la figure 1, selon un exemple de réalisation particulier de la présente invention.

[Fig. 5] illustre un organigramme des différentes étapes d'un procédé de contrôle d'un système ADAS embarqué sans le premier véhicule de la figure 1, selon un exemple de réalisation particulier de la présente invention.

## Description des exemples de réalisation

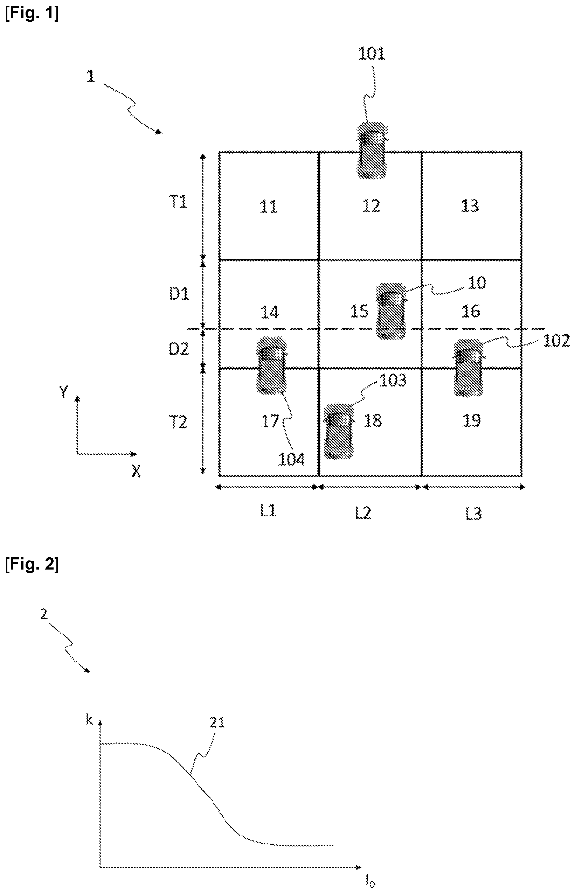

Un procédé et un dispositif de contrôle d'un ou plusieurs systèmes ADAS embarqués dans un véhicule vont maintenant être décrits dans ce qui va suivre en référence conjointement aux figures 1 à 5. Des mêmes éléments sont identifiés avec des mêmes signes de référence tout au long de la description qui va suivre.

Selon un exemple particulier et non limitatif de réalisation de la présente invention, le contrôle d'un système ADAS (par exemple un système ACC et/ou un système SALC) d'un premier véhicule comprend la réception, par exemple par un calculateur du système embarqué du premier véhicule, d'un ensemble de données représentatives de l'environnement autour du premier véhicule. Ces données sont par exemple reçues d'un calculateur en charge du contrôle de capteurs de détection d'objets (par exemple des radars) équipant le premier véhicule. L'environnement autour du premier véhicule, ou au moins une partie de cet environnement, est subdivisé en une pluralité de zones, par exemple 9 zones, centrée sur une zone centrale dans laquelle se trouve le premier véhicule. La pluralité de zones forme ainsi une matrice 3x3 avec 3 colonnes et 3 lignes, la colonne centrale comprenant la zone centrale, cette colonne centrale étant entourée d'une colonne gauche (à gauche de la colonne centrale selon le sens de déplacement du premier véhicule) et d'une colonne droite (à droite de la colonne centrale selon le sens de déplacement du premier véhicule). Un indicateur de présence représentatif de la présence ou de l'absence d'un deuxième véhicule dans chaque zone en fonction du temps est déterminé en fonction des données reçues. A partir des indicateurs de présence associés aux zones de la matrice, un premier indicateur de densité de véhicules associé à une première partie de la matrice est déterminé en fonction des indicateurs de présence des zones comprises dans la première partie de la matrice et un deuxième indicateur de densité de véhicules associé à une deuxième partie de la matrice est déterminé en fonction des indicateurs de présence des zones comprises dans la deuxième partie. La première partie de la matrice comprend avantageusement la colonne centrale et la colonne gauche de la matrice et la deuxième partie de la matrice comprend avantageusement la colonne centrale et la colonne droite de la matrice. Un troisième indicateur de densité de véhicules est déterminé en fonction du premier indicateur et/ou du troisième indicateur, le système ADAS étant contrôlé en fonction de ce troisième indicateur.

L'utilisation d'un indicateur de densité représentatif de la densité des véhicules dans l'environnement du premier véhicule permet d'adapter le contrôle des systèmes ADAS (par exemple les valeurs d'accélération de consigne) du premier véhicule en fonction de la densité de véhicules dans l'environnement immédiat du premier véhicule, en plus des paramètres classiquement utilisés pour le contrôle d'un tel système ADAS. Par exemple, lorsque la densité de véhicules circulant autour du premier véhicule est importante, l'accélération de consigne calculée par le système ACC peut être adaptée, par exemple réduite, par rapport à une accélération brute ou potentielle déterminée simplement à partir des paramètres dynamiques du premier véhicule et des paramètres dynamiques d'un véhicule cible circulant devant le premier véhicule. Cela permet d'améliorer le confort du conducteur et des passagers du premier véhicule en adaptant la dynamique du premier véhicule aux conditions de circulation autour du premier véhicule.

La figure 1 illustre schématiquement un environnement 1 d'un premier véhicule 10, selon un exemple de réalisation particulier et non limitatif de la présente invention.

La figure 1 illustre un premier véhicule 10, par exemple un véhicule automobile, embarquant un ou plusieurs capteurs configurés pour détecter la présence d'objets dans l'environnement 1 du premier véhicule 10. Selon d'autres exemples, le premier véhicule 10 correspond à un car, un bus, un camion, un véhicule utilitaire ou une motocyclette, c'est-à-dire à un véhicule de type véhicule terrestre motorisé.

Le premier véhicule 10 correspond à un véhicule circulant sous la supervision totale d'un conducteur ou circulant dans un mode autonome ou semi-autonome. Le premier véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Le premier véhicule 10 circule par exemple sur une portion de route à plusieurs voies de circulation, par exemple à deux ou trois voies de circulations, les deux ou trois voies de circulation étant par exemple selon un même sens de circulation.

Selon l'exemple de la figure 1, un ensemble de deuxièmes véhicules 101, 102, 103, 104 circulent dans l'environnement 1 autour du premier véhicule 10, avec par exemple le deuxième véhicule 101 circulant devant le premier véhicule 10, par exemple dans la même voie de circulation que celle du premier véhicule 10, à une distance déterminée pouvant varier dans le temps (en fonction du comportement dynamique du premier véhicule 10 et du deuxième véhicule 101), un deuxième véhicule 102 circulant à droite derrière le premier véhicule 10 et deux deuxièmes véhicules 103, 104 circulant à gauche derrière le premier véhicule 10.

Le premier véhicule 10 embarque par exemple un ou plusieurs des capteurs suivants : - un ou plusieurs radars à ondes millimétriques arrangés sur le premier véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le deuxième véhicule 101 situé devant le premier véhicule 10 selon l'exemple de la figure 1), dans le but de détecter des obstacles et leurs distances vis-à-vis du premier véhicule 10 ; et/ou - un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le deuxième véhicule 101) situés dans le faisceau lumineux émis et de mesurer la distance entre le capteur et chaque objet détecté ; et/ou - une ou plusieurs caméras (associées ou non à un capteur de profondeur) pour l'acquisition d'une ou plusieurs images de l'environnement autour du premier véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le deuxième véhicule 101, et d'en déduire un ou plusieurs paramètres dynamiques de l'objet mobile tels que la vitesse et/ou l'accélération. Ces données permettent également de déterminer les lignes au sol pour par exemple participer à la détermination d'appartenance du deuxième véhicule 101 et du premier véhicule 10 à une même voie de circulation par exemple.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le premier véhicule 10. Un tel système ADAS est configuré pour assister, voire remplacer, le conducteur du premier véhicule 10 pour contrôler le premier véhicule 10 sur son parcours.

Le premier véhicule 10 embarque par exemple un système ADAS correspondant à un système de régulation automatique de la vitesse, dit système ACC. Lorsque le système ACC est activé, le système ACC a pour objectif de réaliser une accélération de consigne, notée A(t) (aussi appelée accélération de consigne brute ou accélération potentielle), qui varie au cours du temps 't' et qui permet de maintenir une distance de sécurité déterminée vis-à-vis du deuxième véhicule 101 (qui correspond par exemple à l'objet cible (aussi appelé véhicule cible) du système ACC) en amont du premier véhicule 10, c'est à dire d'un véhicule cible circulant devant le premier véhicule 10 dans le même sens de circulation sur la même voie de circulation tant que ce deuxième véhicule 101 est détecté par les capteurs embarqués dans le premier véhicule 10.

Tant que le deuxième véhicule 101 est sélectionné comme véhicule cible du système ACC, une valeur d'accélération (dite de consigne brute ou potentielle) est par exemple déterminée à un instant courant 't' par le système ACC à partir d'un ensemble de données obtenues d'un ou plusieurs capteurs de détection d'objet embarqués dans le premier véhicule 10 et/ou de paramètres dynamiques du premier véhicule 10. La valeur d'accélération cible (exprimée en m.s$^{-2}$) est par exemple calculée à partir de :

- données représentatives du comportement dynamique du deuxième véhicule 101 (par exemple vitesse et/ou accélération), ces données étant par exemple obtenue à partir d'un ensemble de positions prises par le deuxième véhicule 101 sur un intervalle de temps précédant l'instant courant 't' pour lequel est déterminée l'accélération cible. Les données sur les positions prises par le deuxième véhicule 101 sont avantageusement déterminées à partir des données reçues du ou des capteurs de détection d'objet embarqués dans le premier véhicule 10 ;
- données représentatives du comportement dynamique du premier véhicule 10 (par exemple vitesse, accélération, distance vis-à-vis du deuxième véhicule 101), ces données étant obtenues de capteurs embarqués dans le premier véhicule 10, la distance étant par exemple obtenue à partir des données reçues du ou des capteurs de détection d'objet ; et/ou
- paramètres de consignes fournis au système ACC, tels que par exemple une distance ou un temps inter-véhicule (DIV ou TIV) cible, ces paramètres étant enregistrés en mémoire ou entrés par un utilisateur via une interface Homme-Machine, dite IHM.

Selon un autre exemple, le premier véhicule 10 embarque un système de changement semi-automatique de voie de circulation, dit système SALC (de l'anglais « Semi-Automatic Lane Change »), par exemple en plus du système ACC. Un tel système se base notamment sur la détection et la reconnaissance des lignes de marquage au sol pour autoriser ou non le changement de voie d'une voie de circulation courante vers une voie de circulation adjacente à cette voie de circulation courante, et lorsque le changement est autorisé, pour contrôler la manœuvre permettant au premier véhicule 10 de changer de voie. Parmi les contrôles effectués par le système SALC pour autoriser ou non le changement de voie, le système SALC vérifie que la ligne de marquage au sol délimitant la voie de circulation courante de la voie adjacente cible correspond à une ligne discontinue pour laquelle le changement de voie est autorisé.

Un processus de contrôle d'un système d'aide à la conduite, dit système ADAS, d'un véhicule, par exemple le premier véhicule 10 embarquant le système ACC et/ou le système SALC, est avantageusement mis en œuvre par le premier véhicule 10, c'est-à-dire par un calculateur ou une combinaison de calculateurs du système embarqué du premier véhicule 10, par exemple par le ou les calculateurs en charge de contrôler le système ACC et/ou le système SALC.

Dans une première opération, des données représentatives de l'environnement 1, et notamment des objets tels que des deuxièmes véhicules 101 à 104, sont reçues.

Ces données sont par exemple reçues d'un ou plusieurs capteurs, par exemple des radars et/ou Lidars du premier véhicule 10, via un ou plusieurs bus de communication du système embarqué du premier véhicule 10, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458), Ethernet (selon la norme ISO/IEC 802-3) ou LIN (de l'anglais « Local Interconnect Network », ou en français « Réseau interconnecté local »).

Ces données correspondent par exemple à des données représentatives de distances de chacun des objets détectés (notamment les deuxièmes véhicules) vis-à-vis du premier véhicule 10, par exemple des distances entre un point du premier véhicule 10 et un ensemble de points formant une enveloppe extérieure de chaque deuxième véhicule 101 à 104 tel que vu depuis le premier véhicule 10.

Dans une deuxième opération, l'environnement 1 est subdivisée ou découpée virtuellement en une pluralité de zones 11 à 19, chaque zone de la pluralité correspondant par exemple à une surface à deux dimensions formant un rectangle selon une première dimension, dite longitudinale, selon l'axe longitudinale Y correspondant à l'axe selon lequel le premier véhicule 10 se déplace et selon une deuxième dimension, dite latérale, selon l'axe latéral X orthogonal à l'axe longitudinal Y.

L'ensemble des zones 11 à 19 forment avantageusement une matrice à 3 lignes et 3 colonnes centrée sur une zone (ou cellule) centrale 15 comprenant (ou dans laquelle se trouve) le premier véhicule 10 à un instant courant, la matrice comprenant une colonne centrale (comprenant les zones ou cellules 12, 15, 18) entourée à gauche d'une colonne gauche (comprenant les zones ou cellules 11, 14, 17) et à droite d'une colonne droite (comprenant les zones ou cellules 13, 16, 19).

La matrice comprend également une ligne centrale (comprenant les zones ou cellules 14, 15, 16) entourée d'une première ligne (devant le premier véhicule 10 selon le sens de déplacement du premier véhicule 10) comprenant les zones ou cellules 11, 12, 13 et d'une troisième ligne (derrière le premier véhicule 10) comprenant les zones ou cellules 17, 18, 19.

Les zones ou cellules de la matrice évoluent au fur et à mesure du déplacement du premier véhicule 10 de telle manière que la matrice soit centrée sur la zone centrale 15 comprenant le premier véhicule 10.

La largeur L1, L2 et L3 (selon l'axe X, appelée dimension latérale de la colonne ou des zones qui la composent) de chacune des colonnes prend une valeur déterminée, par exemple égale à 3, 3.5 ou 4 m. Les largeurs de chacune de ces colonnes sont par exemple identiques. Selon une variante, la largeur L1 de la colonne gauche et/ou la largeur L3 de la colonne droite est/sont inférieure(s) à la largeur L2 de la colonne centrale. Par exemple, la largeur L1 et/ou L3 est égale à 1.5, 2 ou 2.5 m.

La longueur (selon l'axe Y, appelée dimension longitudinale de la ligne ou des zones qui la composent) de la ligne centrale comprenant les zones 14, 15, 16 correspond par exemple à la somme de D1 et D2. D1 correspond à la distance (selon l'axe Y) entre un point de référence du premier véhicule 10 (par exemple le milieu de l'essieu arrière ou le barycentre du premier véhicule 10) et la limite entre la première ligne et la ligne centrale. Cette distance D1 est par exemple égale à 5, 6, 7 ou 10 m. D2 correspond à la distance (selon l'axe Y) entre le point de référence du premier véhicule 10 et la limite entre la troisième ligne et la ligne centrale. Cette distance D2 est par exemple égale à 2, 3 ou 4 m.

La longueur de la première ligne est avantageusement définie par une première durée temporelle T1 (ou une première valeur d'un horizon temporel), par exemple égale à 2 ou 3 s. Ainsi, la longueur de cette première ligne en mètres est obtenue en multipliant la vitesse courante du premier véhicule 10 par cette première durée temporelle T1.

De la même manière, la longueur de la troisième ligne est avantageusement définie par une deuxième durée temporelle T2 (ou une deuxième valeur d'un horizon temporel), par exemple égale à 2 ou 3 s. Ainsi, la longueur de cette troisième ligne en mètres est obtenue en multipliant la vitesse courante du premier véhicule 10 par cette deuxième durée temporelle T2.

Les valeurs des dimensions L1, L2, L3, D1, D2, T1, T2 sont par exemple fixées par le constructeur du premier véhicule 10 ou par le concepteur du ou des systèmes ADAS embarqués, ces valeurs étant stockées dans une mémoire embarquée dans le premier véhicule 10. Selon une variante, une ou plusieurs de ces valeurs sont paramétrables, par exemple par le conducteur via une IHM (Interface Homme-Machine).

Dans une troisième opération, pour chaque zone 11 à 19 de la matrice, un indicateur de présence représentatif de présence ou d'absence d'un deuxième véhicule est déterminé en fonction des données reçues à la première opération. Cet indicateur de présence est avantageusement fonction du temps et correspond par exemple à une valeur comprise entre 0 et 1 évoluant en fonction du temps et en fonction de la détection de la présence (ou de l'absence de détection) d'un deuxième véhicule dans la zone considérée, la détection étant par exemple mise en œuvre à intervalles régulier (par exemple toutes les 100, 200, 500 ms) pour mettre à jour l'indicateur de présence de chaque zone.

L'indicateur de présence Ip dans une zone considérée est par exemple déterminée à partir de l'équation suivante :

$$\mathrm{Ip}(t) = \mathrm{Ip}(t\text{-}dt) + \Delta(t)$$

Avec Ip(t) l'indicateur de présence à l'instant t, Ip(t-dt) l'indicateur de présence déterminé à l'instant précédent, avec un écart temporel entre l'instant courant t et l'instant précédent égal à dt (par exemple égale à 100, 200 ou 500 ms), et $\Delta(t)$ égal à une valeur d'incrément ou de décrément prenant une première valeur déterminée (incrément) en fonction de la détection de la présence d'un deuxième véhicule dans la zone considérée à l'instant courant t et une deuxième valeur déterminée lorsque la présence d'aucun deuxième véhicule n'est détecté dans la zone considérée alors qu'un deuxième véhicule était présent dans la zone considérée à l'instant précédent.

La première valeur (incrément), notée $\Delta 1(t)$, est une valeur positive ($\Delta 1(t) > 0$) inférieure à 1. $\Delta 1(t)$ est par exemple égale à 0.1, 0.15, 0.2 ou 0.3. A chaque détection d'un deuxième véhicule dans la zone considérée, Δ1(t) prend la valeur qui lui est associée, quel que soit l'état de détection d'un deuxième véhicule dans la zone considérée à l'instant précédent.

La deuxième valeur (décrément), notée Δ2(t), est une valeur négative (Δ2(t) < 0) supérieure à -1. Δ2(t) est par exemple égale à -0.1, -0.15, -0.2 ou -0.3. Lorsqu'un deuxième véhicule était présent dans la zone considérée à l'instant précédent et que ce deuxième véhicule n'est plus détecté comme présent dans cette zone considérée à l'instant courant, alors Δ2(t) prend la valeur qui lui est associée.

Selon un exemple particulier, la deuxième valeur correspond à la valeur opposée à la première valeur, c'est-à-dire que :

$$\Delta2(t) = -\Delta1(t),$$

et

[Math 1]

$$|\Delta1(t)| = |\Delta2(t)|$$

Selon un autre exemple, la valeur absolue de la première valeur est différente de la valeur absolue de la deuxième valeur, soit :

[Math 2]

$$|\Delta1(t)| \neq |\Delta2(t)|$$

Par exemple, Δ1(t) = 0.1 et Δ2(t) = -0.2.

Les valeurs de Δ1(t) et Δ2(t) sont par exemple enregistrées en mémoire, pour chaque zone, pour un ensemble d'instants temporels consécutifs auxquels elles ont été déterminées ou calculée. Ceci permet notamment de connaitre ou déterminer l'état de détection (présent ou absent) d'un deuxième véhicule dans la zone considérée à l'instant précédent un instant courant.

Dans une quatrième opération, un premier indicateur de densité de véhicules associé à une première partie de la matrice est déterminé en fonction des indicateurs de présence des zones comprises dans la première partie de la matrice. De la même manière, un deuxième indicateur de densité de véhicules associé à une deuxième partie de la matrice (différente de la première partie) est également déterminé en fonction des indicateurs de présence des zones comprises dans la deuxième partie.

La première partie comprend par exemple la colonne centrale et la colonne gauche, et les zones 11, 12, 14, 15, 17, 18 comprises dans ces 2 colonnes. Le premier indicateur représente ainsi la densité de véhicules à gauche du premier véhicule 10, cette partie gauche incluant la colonne centrale à laquelle appartient le premier véhicule 10.

La deuxième partie comprend par exemple la colonne centrale et la colonne droite, et les zones 12, 13, 15, 16, 18, 19 comprises dans ces 2 colonnes. Le deuxième indicateur représente ainsi la densité de véhicules à droite du premier véhicule 10, cette partie droite incluant la colonne centrale à laquelle appartient le premier véhicule 10.

Le premier indicateur de densité, noté Id1, correspond par exemple à la moyenne, à l'instant courant de détermination de ce premier indicateur de densité, des indicateurs de présence des zones comprises dans la première partie. Id1 est ainsi obtenue via l'équation suivante :

[Math 3]

$$Id1 = \frac{Ip_{11}(t) + Ip_{12}(t) + Ip_{14}(t) + Ip_{15}(t) + Ip_{17}(t) + Ip_{18}(t)}{6}$$

Avec $Ip_{11}(t)$ l'indicateur de présence associée à la zone 11, $Ip_{12}(t)$ l'indicateur de présence associée à la zone 12, $Ip_{14}(t)$ l'indicateur de présence associée à la zone 14, $Ip_{15}(t)$ l'indicateur de présence associée à la zone 15, $Ip_{17}(t)$ l'indicateur de présence associée à la zone 17 et $Ip_{18}(t)$ l'indicateur de présence associée à la zone 18.

Le deuxième indicateur de densité, noté Id2, correspond par exemple à la moyenne, à l'instant courant de détermination de ce deuxième indicateur de densité, des indicateurs de présence des zones comprises dans la deuxième partie. Id2 est ainsi obtenue via l'équation suivante :

[Math 4]

$$Id1 = \frac{Ip_{12}(t) + Ip_{13}(t) + Ip_{15}(t) + Ip_{16}(t) + Ip_{18}(t) + Ip_{19}(t)}{6}$$

Avec $Ip_{13}(t)$ l'indicateur de présence associée à la zone 13, $Ip_{16}(t)$ l'indicateur de présence associée à la zone 16 et $Ip_{19}(t)$ l'indicateur de présence associée à la zone 19.

Chaque colonne de zones est par exemple associée à une voie de circulation, la colonne centrale représentant la voie de circulation courante du premier véhicule 10.

Selon un autre exemple, les 3 colonnes ne représentent que 2 voies de circulation, la largeur et/ou l'emplacement des colonnes ne correspondant pas exactement à la largeur et/ou l'emplacement des voies de circulation de la route sur laquelle circule le premier véhicule 10.

Selon cet exemple, le premier indicateur et le deuxième indicateur fournisse ainsi une indication sur la densité des véhicules présents dans une zone située plutôt à gauche du premier véhicule 10 et dans une zone située plutôt à droite du premier véhicule 10.

Dans une cinquième opération, un troisième indicateur de densité est déterminé en fonction du premier indicateur de densité et/ou du deuxième indicateur de densité. Le ou les systèmes ADAS embarqués dans le premier véhicule 10 sont contrôlés en fonction de ce troisième indicateur de densité, c'est-à-dire que le troisième indicateur de densité est pris en compte par ce ou ces systèmes ADAS pour déterminer ou calculer les paramètres utilisés pour contrôler le premier véhicule 10 pour la ou les fonctions prises en charge par ce ou ces systèmes ADAS.

Le troisième indicateur de densité correspond par exemple :

- à une moyenne du premier indicateur de densité et du deuxième indicateur de densité lorsqu'aucun clignotant du premier véhicule n'est activé, c'est-à-dire Id = 0.5 * (Id1 + Id2), avec Id le troisième indicateur de densité, Id1 le premier indicateur de densité et Id2 le deuxième indicateur de densité ;
- au premier indicateur de densité uniquement lorsqu'un clignotant gauche du premier véhicule est activé, c'est-à-dire Id = Id1 ; et
- au deuxième indicateur de densité uniquement lorsqu'un clignotant droit du premier véhicule est activé, c'est-à-dire Id = Id2.

Le processeur en charge du processus reçoit par exemple une information représentative du déclenchement des clignotants, lorsque les clignotants sont activés d'un côté ou de l'autre du premier véhicule 10, par exemple par le conducteur du premier véhicule. Cette information est par exemple reçue du calculateur en charge du contrôle des clignotants du premier véhicule 10 sous la forme d'un ensemble de données, par exemple multiplexées. Ces calculateurs appartiennent à un ensemble de calculateurs et de capteurs formant le système embarqué du premier véhicule 10. Les calculateurs et/ou capteurs du système embarqué sont reliés en communication via un ou plusieurs bus de communication, par exemple un ou plusieurs bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458), Ethernet (selon la norme ISO/IEC 802-3) ou LIN (de l'anglais « Local Interconnect Network », ou en français « Réseau interconnecté local »).

Selon un premier exemple, le système ADAS correspond à un système SALC. Lorsque l'activation des clignotants est détectée d'un côté ou de l'autre, le système SALC utilise l'indicateur de densité Id1 ou Id2 selon le côté de déclenchement des clignotants comme contrôle supplémentaire pour décider si le changement de voie depuis la voie courante vers la voie de destination (du côté des clignotants activés) peut se faire ou doit être retardée. En effet, même si l'espace libre est suffisant pour permettre un changement de voie, une densité importante de véhicules dans la partie du côté du changement de voie peut intimider le conducteur et le mettre mal à l'aise. Le système SALC peut ainsi dans ce cas retarder le changement de voie en fonction de l'indicateur de densité ou requérir une confirmation du conducteur, par exemple en déclenchant le rendu (par exemple l'affichage) d'un message à destination du conducteur via une IHM dédiée, requérant du conducteur qu'il confirme sa volonté de mettre en œuvre le changement de voie ou au contraire qu'il interrompe le changement de voie.

Selon un deuxième exemple, le système ADAS correspond à un système ACC. Selon ce deuxième exemple, l'accélération déterminée par le système ACC en fonction des paramètres dynamiques du premier véhicule 10 et d'un véhicule cible circulant devant le premier véhicule 10, dite accélération potentielle brute (notée $A_{potentielle}$), est filtrée en appliquant un coefficient (compris entre 0 et 1) à cette accélération potentielle brute pour obtenir une accélération de consigne pour le premier véhicule 10.

Ce coefficient (notée k) est avantageusement fonction du troisième indicateur de densité (noté Id) déterminé à la cinquième opération.

Ainsi, l'accélération de consigne A est obtenue à partir de l'équation suivante :

$$A = k(\text{Id}) * A_{potentielle}$$

La figure 2 illustre un exemple particulier et non-limitatif d'une fonction 21 entre le coefficient (notée k en ordonné du diagramme 2) et le troisième indicateur de densité (noté Id en abscisse du diagramme 2).

Selon l'exemple de la figure 2, la fonction 21 correspond à une fonction monotone décroissante du coefficient k en fonction du troisième indicateur de densité Id.

Selon cet exemple, k prend une valeur maximale pour un intervalle de valeurs d'Id comprises entre 0 et une première valeur seuil (par exemple égal à 0.2 ou 0.3), la valeur maximale de k étant par exemple égale à 0.9 ou 1. Le coefficient k prend une valeur minimale lorsque le troisième indicateur de densité atteint une deuxième valeur seuil, par exemple égale à 0.7, 0.8 ou 0.9, la valeur minimale de k étant par exemple égale à 0.2, 0.3 ou 0.4. Le coefficient k décroit strictement selon un profil déterminé entre la première valeur seuil et la deuxième valeur seuil du troisième indicateur de densité Id.

Le coefficient k permet ainsi de diminuer l'accélération potentielle brute calculée par le système ACC en fonction du troisième indicateur de densité, l'accélération potentielle brute étant d'autant plus réduite ou filtrée que le troisième indicateur de densité Id est élevé, au moins jusqu'à une limite correspondant à la valeur seuil.

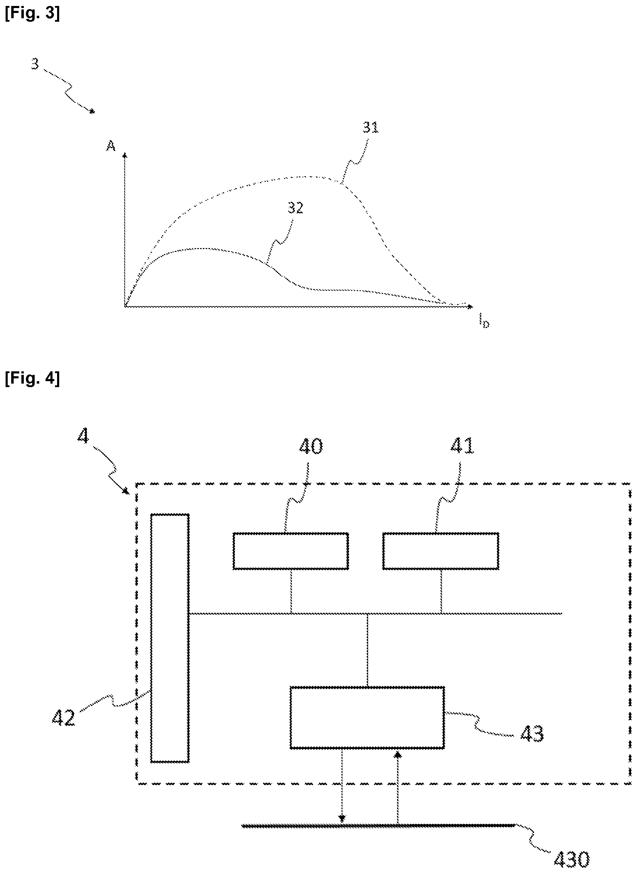

La figure 3 illustre un diagramme 3 représentant deux profils d'accélération (noté A en ordonnée du diagramme 3) obtenu en sortie du système ACC du premier véhicule 10 en fonction du troisième indicateur de densité (noté id en abscisse du diagramme 3), selon un exemple de réalisation particulier et non limitatif de la présente invention.

Selon l'exemple de la figure 3, le premier profil d'accélération 31 correspond au profil de l'accélération potentielle brute, c'est-à-dire à une accélération déterminée par le système ACC sans application du coefficient k décrit en regard de la figure 2, c'est-à-dire sans filtrage.

Le deuxième profil d'accélération correspond au profil de l'accélération obtenu en appliquant le coefficient k à l'application potentielle brute calculée par le système ACC.

Tel que cela apparait sur la figure 3, les profils 31 et 32 sont identiques pour des valeurs faibles du troisième indicateur de densité, par exemple pour les valeurs d'Id inférieures à la première valeur seuil (par exemple inférieures à 0.1 ou 0.2) et pour des valeurs élevées du troisième indicateur de densité, par exemple pour les valeurs d'Id supérieures à la troisième valeur seuil (par exemple supérieures inférieures à 0.7, 0.8 ou 0.9). Sur la plage de valeurs d'Id comprises ente la première valeur seuil et la deuxième valeur seuil, la valeur de l'accélération selon le deuxième profil 32 est inférieure à la valeur de l'accélération selon le premier profil 31, l'accélération selon le deuxième profil 32 étant filtrée par rapport à l'accélération selon le premier profil 31 par application du coefficient k (qui varie en fonction de Id) à l'accélération selon le premier profil 31.

Un tel exemple de mise en œuvre permet d'éviter une accélération trop forte du premier véhicule (lorsque le système ACC est actif) lorsque la densité de véhicules est importante. Une accélération potentielle brute élevée est par exemple déterminée par le système ACC lorsque le véhicule cible devant le premier véhicule 10 change de trajectoire, par exemple change de voie de circulation. Ce véhicule cible est alors désélectionné par le système ACC pour ne plus correspondre à l'objet cible du système ACC et le système ACC sélectionne un nouveau véhicule circulant devant le premier véhicule 10 comme étant le nouvel objet cible. Si ce nouvel objet cible est à une distance du premier véhicule 10 supérieure au DIV (distance inter-véhicule) ou TIV (temps inter-véhicule) de consigne, alors l'accélération potentielle brute calculée par le système ACC est élevée.

Une accélération élevée peut surprendre ou effrayer le conducteur lorsque le trafic autour du premier véhicule est dense. Le filtrage de l'accélération potentielle brute par application d'un coefficient fonction du troisième indicateur de densité permet d'atténuer l'accélération lorsque la densité est élevée, ce qui permet de rassurer le conducteur qui se sent plus en sécurité.

La figure 4 illustre schématiquement un dispositif 4 configuré pour contrôler un ou plusieurs systèmes ADAS d'un véhicule, par exemple du premier véhicule 10, selon un exemple de réalisation particulier et non limitatif de la présente invention. Le dispositif 4 correspond par exemple à un dispositif embarqué dans le premier véhicule 10, par exemple un calculateur.

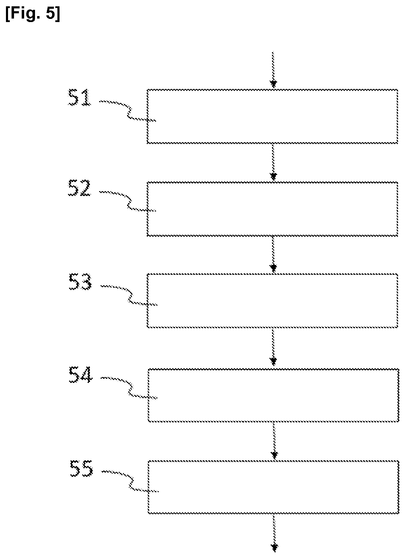

Le dispositif 4 est par exemple configuré pour la mise en œuvre des opérations décrites en regard des figures 1 à 3 et/ou des étapes du procédé décrit en regard de la figure 5. Des exemples d'un tel dispositif 4 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 4, individuellement ou en combinaison, peuvent être intégrés dans un unique circuit intégré, dans plusieurs circuits intégrés, et/ou dans des composants discrets. Le dispositif 4 peut être réalisé sous la forme de circuits électroniques ou de modules logiciels (ou informatiques) ou encore d'une combinaison de circuits électroniques et de modules logiciels.

Le dispositif 4 comprend un (ou plusieurs) processeur(s) 40 configurés pour exécuter des instructions pour la réalisation des étapes du procédé et/ou pour l'exécution des instructions du ou des logiciels embarqués dans le dispositif 4. Le processeur 40 peut inclure de la mémoire intégrée, une interface d'entrée/sortie, et différents circuits connus de l'homme du métier. Le dispositif 4 comprend en outre au moins une mémoire 41 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 41.

Selon différents exemples de réalisation particuliers et non limitatifs, le dispositif 4 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 4 comprend un bloc 42 d'éléments d'interface pour communiquer avec des dispositifs externes. Les éléments d'interface du bloc 42 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 4 comprend une interface de communication 43 qui permet d'établir une communication avec d'autres dispositifs (tels que d'autres calculateurs du système embarqué) via un canal de communication 430. L'interface de communication 43 correspond par exemple à un transmetteur configuré pour transmettre et recevoir des informations et/ou des données via le canal de communication 430. L'interface de communication 43 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 4 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 4.

La figure 5 illustre un organigramme des différentes étapes d'un procédé de contrôle d'un système ADAS d'un véhicule, par exemple du premier véhicule 10, selon un exemple de réalisation particulier et non limitatif de la présente invention. Le procédé est par exemple mis en œuvre par un dispositif embarqué dans le premier véhicule 10 ou par le dispositif 4 de la figure 4. Le procédé est par exemple mis en œuvre par un ou plusieurs processeurs d'un ou plusieurs calculateurs, par exemple un ou plusieurs calculateurs contrôlant le système ADAS du véhicule.

Dans une première étape 51, des données représentatives d'un environnement entourant le premier véhicule sont reçues depuis au moins un capteur de détection d'objet embarqué dans le premier véhicule.

Dans une deuxième étape 52, l'environnement du premier véhicule est subdivisé spatialement en une pluralité de zones, la pluralité de zones formant une matrice à 3 lignes et 3 colonnes centrée sur une zone centrale comprenant le premier véhicule, la matrice comprenant une colonne centrale entourée à gauche d'une colonne gauche et à droite d'une colonne droite.

Dans une troisième étape 53, pour chaque zone de la pluralité de zones, un indicateur de présence représentatif de présence ou d'absence d'un deuxième véhicule est déterminé en fonction du temps dans chaque zone en fonction des données.

Dans une quatrième étape 54, un premier indicateur de densité de véhicules associé à une première partie de la matrice est déterminé en fonction des indicateurs de présence des zones comprises dans la première partie de la matrice et un deuxième indicateur de densité de véhicules associé à une deuxième partie de la matrice est déterminé en fonction des indicateurs de présence des zones comprises dans la deuxième partie. La première partie comprend la colonne centrale et la colonne gauche de la matrice et la deuxième partie comprend la colonne centrale et la colonne droite de la matrice.

Dans une cinquième étape 55, le système ADAS est contrôlé en fonction d'un troisième indicateur de densité de véhicules, le troisième indicateur de densité de véhicules étant fonction du premier indicateur de densité de véhicules et/ou du deuxième indicateur de densité de véhicules.

Selon une variante, les variantes et exemples des opérations décrits en relation avec la figure 1, 2 et/ou 3 s'appliquent aux étapes du procédé de la figure 5.

Bien entendu, la présente invention ne se limite pas aux exemples de réalisation décrits ci-avant mais s'étend à un procédé de contrôle d'un véhicule, par exemple un véhicule autonome, qui inclurait des étapes secondaires sans pour cela sortir de la portée de la présente invention tel que défini par les revendications annexées. Il en serait de même d'un dispositif configuré pour la mise en œuvre d'un tel procédé.

La présente invention concerne également un système ADAS, par exemple un système de régulation adaptative de vitesse pour véhicule, comprenant le dispositif 4 de la figure 4.

La présente invention concerne également un véhicule, par exemple automobile ou plus généralement un véhicule autonome à moteur terrestre, comprenant le dispositif 4 de la figure 4 ou le système ADAS pour véhicule ci-dessus.

## Revendications

1. Procédé de contrôle d'un système d'aide à la conduite, dit système ADAS, embarqué dans un premier véhicule (10), ledit procédé comprenant les étapes suivantes :

   - réception (51) de données représentatives d'un environnement (1) entourant ledit premier véhicule (10) depuis au moins un capteur de détection d'objet embarqué dans ledit premier véhicule (10) ;
   - subdivision spatiale (52) dudit environnement (1) en une pluralité de zones (11 à 19), ladite pluralité de zones formant une matrice à 3 lignes et 3 colonnes centrée sur une zone centrale (15) comprenant ledit premier véhicule (10), ladite matrice comprenant une colonne centrale entourée à gauche d'une colonne gauche et à droite d'une colonne droite ;
   - pour chaque zone de ladite pluralité de zones (11 à 19), détermination (53) d'un indicateur de présence représentatif de présence ou d'absence d'un deuxième véhicule (101, 102, 103, 104) en fonction du temps dans ladite chaque zone en fonction desdites données ;
   - détermination (54) d'un premier indicateur de densité de véhicules associé à une première partie de ladite matrice en fonction des indicateurs de présence des zones (11, 12, 14, 15, 17, 18) comprises dans ladite première partie de la matrice et d'un deuxième indicateur de densité de véhicules associé à une deuxième partie de ladite matrice en fonction des indicateurs de présence des zones (12, 13, 15, 16, 18, 19) comprises dans ladite deuxième partie, ladite première partie comprenant la colonne centrale et la colonne gauche de ladite matrice et ladite deuxième partie comprenant la colonne centrale et la colonne droite de ladite matrice ;
   - contrôle (55) dudit système ADAS en fonction d'un troisième indicateur de densité de véhicules, ledit troisième indicateur de densité de véhicules étant fonction dudit premier indicateur de densité de véhicules et/ou dudit deuxième indicateur de densité de véhicules,

   **caractérisé en ce que** , pour chaque zone, l'indicateur de présence à un instant courant est égal à l'indicateur de présence à un instant précédant l'instant courant auquel est ajouté une première valeur déterminée positive lorsqu'un deuxième véhicule est détecté dans ladite chaque zone à l'instant courant et auquel est ajouté une deuxième valeur déterminée négative lorsqu'un deuxième véhicule détecté dans ladite chaque zone audit instant précédent n'est plus détecté dans ladite chaque zone à l'instant courant.

2. Procédé selon la revendication 1, pour lequel ladite deuxième valeur déterminée correspond à l'opposée de ladite première valeur déterminée ou pour lequel la valeur absolue de ladite première valeur déterminée est différente de la valeur absolue de ladite deuxième valeur déterminée.

3. Procédé selon l'une des revendications 1 à 2, pour lequel ledit premier indicateur de densité correspond à une moyenne des indicateurs de présence des zones (11, 12, 14, 15, 17, 18) comprises dans ladite première partie de la matrice et ledit deuxième indicateur de densité correspond à une moyenne des indicateurs de présence des zones (12, 13, 15, 16, 18, 19) comprises dans ladite deuxième partie de la matrice.

4. Procédé selon l'une des revendications 1 à 3, pour lequel chaque zone de ladite pluralité de zones (11 à 19) possède une forme rectangulaire définie par une dimension longitudinale selon un axe longitudinal correspondant à un sens de déplacement dudit premier véhicule et par une dimension latérale selon un axe latéral orthogonal audit axe longitudinal,

la dimension longitudinale des zones de la ligne centrale de ladite matrice comprenant ladite zone centrale correspondant à une somme d'une première distance déterminée et d'une deuxième distance déterminée, la première distance déterminée correspondant à une distance entre un point de référence dudit premier véhicule (10) et une première limite entre ladite ligne centrale et une première ligne de ladite matrice située devant ledit premier véhicule (10), la deuxième distance déterminée correspondant à une distance entre ledit point de référence dudit premier véhicule (10) et une deuxième limite entre ladite ligne centrale et une troisième ligne de ladite matrice située derrière ledit premier véhicule (10),
la dimension longitudinale des zones (11, 12, 13) de ladite première ligne étant fonction d'une première durée temporelle, et
la dimension longitudinale des zones (17, 18, 19) de ladite troisième ligne étant fonction d'une deuxième durée temporelle.

5. Procédé selon l'une des revendications 1 à 4, pour lequel ledit troisième indicateur correspond :

- à une moyenne dudit premier indicateur de densité et dudit deuxième indicateur de densité lorsqu'aucun clignotant du premier véhicule (10) n'est activé ;
- audit premier indicateur de densité uniquement lorsqu'un clignotant gauche dudit premier véhicule (10) est activé ; et
- audit deuxième indicateur de densité uniquement lorsqu'un clignotant droit dudit premier véhicule (10) est activé.

6. Procédé selon l'une des revendications 1 à 5, pour lequel ledit système ADAS correspond à un système de régulation adaptative de vitesse, dit système ACC, ledit procédé comprenant en outre une détermination d'une consigne d'accélération pour ledit premier véhicule (10) en appliquant un coefficient déterminé à une accélération potentielle déterminée par ledit système ACC, ledit coefficient étant compris entre 0 et 1 et fonction dudit troisième indicateur de densité de véhicules suivant une fonction (21) monotone décroissante dudit troisième indicateur.

7. Programme d'ordinateur comportant des instructions pour la mise en œuvre du procédé selon l'une quelconque des revendications précédentes, lorsque ces instructions sont exécutées par un processeur.

8. Dispositif (4) de contrôle d'un système d'aide à la conduite, dit système ADAS, d'un véhicule, ledit dispositif (4) comprenant une mémoire (41) associée à au moins un processeur (40) configuré pour la mise en œuvre des étapes du procédé selon l'une quelconque des revendications 1 à 6.

9. Véhicule (10) comprenant le dispositif (4) selon la revendication 8.

**Patentansprüche**

1. Verfahren zur Steuerung eines in einem ersten Fahrzeug (10) eingebauten Fahrerassistenzsystems, das ADAS genannt wird, wobei das Verfahren die folgenden Schritte umfasst:

- Empfang (51) von Daten, die für eine Umgebung (1) repräsentativ sind, die das erste Fahrzeug (10) umgibt, von mindestens einem in das erste Fahrzeug (10) eingebauten Objekterkennungssensor;
- räumliche Unterteilung (52) der Umgebung (1) in eine Vielzahl von Bereichen (11 bis 19), wobei die Vielzahl von Bereichen eine Matrix mit drei Zeilen und drei Spalten bildet, die auf einen zentralen Bereich (15) zentriert ist, der das erste Fahrzeug (10) umfasst, wobei die Matrix eine zentrale Spalte umfasst, die links von einer linken Spalte und rechts von einer rechten Spalte umgeben ist;
- Bestimmung (53) eines repräsentativen Anwesenheitsindikators für das Vorhandensein oder Fehlen eines zweiten Fahrzeugs (101, 102, 103, 104) in Abhängigkeit von der Zeit in jedem der Bereiche (11 bis 19);
- Bestimmung (54) eines ersten Indikators für die Fahrzeugdichte, der einem ersten Teil der Matrix zugeordnet ist, auf der Grundlage der Indikatoren für das Vorhandensein der Bereiche (11, 12, 14, 15, 17, 18), die in dem ersten Teil der Matrix enthalten sind, und eines zweiten Indikators für die Fahrzeugdichte, der einem zweiten Teil der Matrix zugeordnet ist, auf der Grundlage der Indikatoren für das Vorhandensein der Bereiche (12, 13, 15, 16, 18, 19), die in dem zweiten Teil enthalten sind, wobei der erste Teil die mittlere und die linke Spalte der Matrix umfasst der Matrix;
- Überprüfung (55) des ADAS in Abhängigkeit von einem dritten Indikator für die Fahrzeugdichte, wobei der dritte Indikator für die Fahrzeugdichte in Abhängigkeit von dem ersten Indikator für die Fahrzeugdichte und/oder dem zweiten Indikator für die Fahrzeugdichte steht,

**dadurch gekennzeichnet, dass** für jede Zone der Indikator für das Vorhandensein zu einem aktuellen Zeitpunkt gleich dem Indikator für das Vorhandensein zu einem Zeitpunkt vor dem aktuellen Zeitpunkt ist, zu dem ein erster positiver festgelegter Wert addiert wird, wenn ein zweites Fahrzeug in jeder Zone zum aktuellen Zeitpunkt detektiert wird, und zu dem ein zweiter negativer festgelegter Wert addiert wird, wenn ein zweites Fahrzeug, das in der jeweiligen Zone zu dem vorherigen Zeitpunkt detektiert wird, nicht mehr in der jeweiligen Zone zum aktuellen Zeitpunkt detektiert wird.

2. Verfahren nach Anspruch 1, bei dem der zweite bestimmte Wert dem entgegengesetzten ersten bestimmten Wert entspricht oder bei dem der Absolutwert des ersten bestimmten Werts von dem Absolutwert des zweiten bestimmten Werts verschieden ist.

3. Verfahren nach einem der Ansprüche 1 bis 2, bei dem der erste Dichteindikator einem Durchschnitt der Anwesenheitsindikatoren der Bereiche (11, 12, 14, 15, 17, 18) entspricht, die in dem ersten Teil der Matrix enthalten sind, und der zweite Dichteindikator einem Durchschnitt der Anwesenheitsindikatoren der Bereiche (12, 13, 15, 16, 18, 19) entspricht, die in dem zweiten Teil der Matrix enthalten sind.

4. Verfahren nach einem der Ansprüche 1 bis 3, bei dem jeder der Vielzahl von Bereichen (11 bis 19) eine rechteckige Form aufweist, die durch eine Längsabmessung entlang einer Längsachse, die einer Bewegungsrichtung des ersten Fahrzeugs entspricht, und durch eine Seitenabmessung entlang einer zur Längsachse orthogonalen Seitenachse definiert ist.

die Längsabmessung der Bereiche der Mittellinie der Matrix, die den Mittelbereich entsprechend einer Summe eines ersten bestimmten Abstands und eines zweiten bestimmten Abstands umfasst, wobei der erste bestimmte Abstand einem Abstand zwischen einem Bezugspunkt des ersten Fahrzeugs (10) und einer ersten Grenze zwischen der Mittellinie und einer ersten Linie der Matrix entspricht, die sich vor dem ersten Fahrzeug (10) befindet, wobei der zweite bestimmte Abstand einem Abstand zwischen dem Bezugspunkt des ersten Fahrzeugs (10) und einer zweiten Grenze zwischen der Mittellinie und einer dritten Linie der Matrix entspricht, die sich hinter dem ersten Fahrzeug (10) befindet,
die Längenabmessung der Bereiche (11, 12, 13) der ersten Linie von einer ersten Zeitdauer abhängt und
die Längsabmessung der Bereiche (17, 18, 19) der dritten Zeile ist abhängig von einer zweiten Zeitdauer.

5. Verfahren nach einem der Ansprüche 1 bis 4, bei dem der dritte Indikator:

- auf einen Mittelwert des ersten und des zweiten Dichteindikators, wenn kein Blinker des ersten Fahrzeugs (10) aktiviert ist;
- bei dem ersten Dichteindikator nur dann, wenn ein linkes Blinklicht des ersten Fahrzeugs (10) aktiviert ist; und
- bei dem zweiten Dichteindikator nur dann, wenn ein rechter Blinker des ersten Fahrzeugs (10) aktiviert ist.

6. Verfahren nach einem der Ansprüche 1 bis 5, bei dem das ADAS-System einem adaptiven Geschwindigkeitsregelungssystem entspricht, das ACC-System, wobei das Verfahren ferner das Bestimmen eines Beschleunigungssollwerts für das erste Fahrzeug (10) durch Anwenden eines bestimmten Koeffizienten auf eine von dem ACC-System bestimmte potenzielle Beschleunigung umfasst, wobei der Koeffizient zwischen 0 und 1 liegt und eine Funktion des dritten Fahrzeugdichteanzeigers in Abhängigkeit von einer monotonen abnehmenden Funktion (21) des dritten Anzeigers ist.

7. Computerprogramm mit Anweisungen zur Durchführung des Verfahrens nach einem der vorhergehenden Ansprüche, wenn diese Anweisungen von einem Prozessor ausgeführt werden.

8. Vorrichtung (4) zur Steuerung eines Fahrerassistenzsystems, das ADAS-System, eines Fahrzeugs, wobei die Vorrichtung (4) einen Speicher (41) umfasst, der mit mindestens einem Prozessor (40) verbunden ist, der zur Durchführung der Schritte des Verfahrens nach einem der Ansprüche 1 bis 6 konfiguriert ist.

9. Fahrzeug (10) mit der Vorrichtung (4) nach Anspruch 8.

EP 4 469 324 B1

**Claims**

1. Method for controlling a driving aid system, known as ADAS, on board a first vehicle (10), said method comprising the following steps:

  receipt (51) of data representative of an environment (1) surrounding said first vehicle (10) from at least one object detection sensor embedded in said first vehicle (10);

  - spatial subdivision (52) of said environment (1) into a plurality of zones (11 to 19), said plurality of zones forming a matrix with 3 lines and 3 columns centred on a centre zone (15) comprising said first vehicle (10), said matrix comprising a centre column surrounded on the left by a left column and on the right by a right column;
  - for each zone of said plurality of zones (11 to 19), determining (53) a presence indicator representative of the presence or absence of a second vehicle (101, 102, 103, 104) as a function of time in said each zone as a function of said data;

  determining (54) a first vehicle density indicator associated with a first part of said matrix as a function of the presence indicators of the zones (11, 12, 14, 15, 17, 18) included in said first part of the matrix and a second vehicle density indicator associated with a second part of said matrix as a function of the presence indicators of the zones (12, 13, 15, 16, 18, 19) included in said second part, said first part comprising the centre column and the left column of said matrix and said second part comprising the centre column and the right column of that matrix; checking (55) said ADAS system as a function of a third vehicle density indicator, said third vehicle density indicator being a function of said first vehicle density indicator and/or of said second vehicle density indicator, wherein, for each zone, the presence indicator at a current instant is equal to the presence indicator at an instant preceding the current instant to which is added a first determined positive value when a second vehicle is detected in said each zone at the current instant and to which is added a second determined negative value when a second vehicle detected in said each zone at said previous instant is no longer detected in said each zone at the current instant.

2. Method according to claim 1, wherein said second determined value corresponds to the opposite of said first determined value or wherein the absolute value of said first determined value is different from the absolute value of said second determined value.

3. Method according to one of claims 1 to 2, for which the said first density indicator corresponds to an average of the presence indicators of the zones (11, 12, 14, 15, 17, 18) included in the said first part of the matrix and the said second density indicator corresponds to an average of the presence indicators of the zones (12, 13, 15, 16, 18, 19) included in the said second part of the matrix.

4. Method according to one of claims 1 to 3, for which each zone of the said plurality of zones (11 to 19) has a rectangular shape defined by a longitudinal size along a longitudinal axis corresponding to a direction of movement of the said first vehicle and by a lateral size along a lateral axis orthogonal to the said longitudinal axis,

  the longitudinal size of the zones of the centre line of said matrix comprising said centre zone corresponding to a sum of a first determined distance and a second determined distance, the first determined distance corresponding to a distance between a reference point of said first vehicle (10) and a first boundary between said centre line and a first line of said matrix located in front of said first vehicle (10), the second determined distance corresponding to a distance between said reference point of said first vehicle (10) and a second boundary between said centre line and a third line of said matrix located behind said first vehicle (10),
  the longitudinal size of the zones (11, 12, 13) of said first line being a function of a first time period, and
  the longitudinal size of the zones (17, 18, 19) of said third line being a function of a second time period.

5. Method according to one of claims 1 to 4, for which the said third indicator corresponds to:

  - an average of said first density indicator and said second density indicator when no flashing light of the first vehicle (10) is activated;
  - said first density indicator only when a left-hand indicator of said first vehicle (10) is activated; and
  - said second density indicator only when a right-hand indicator of said first vehicle (10) is activated.

6.  Method according to one of claims 1 to 5, for which the said ADAS system corresponds to an adaptive speed regulation system, called ACC system, the said method further comprising a determination of an acceleration setpoint for the said first vehicle (10) by applying a determined coefficient to a potential acceleration determined by the said ACC system, the said coefficient being between 0 and 1 and a function of the said third vehicle density indicator according to a decreasing monotonous function (21) of the said third indicator.

7.  Computer plan including instructions for implementing the method according to any one of the previous claims, when these instructions are executed by a processor.

8.  Device (4) for controlling a driving aid system, called ADAS system, of a vehicle, said device (4) comprising a memory (41) associated with at least one processor (40) configured for implementing the steps of the method according to any one of claims 1 to 6.

9.  Vehicle (10) comprising the device (4) according to claim 8.

[Fig. 1]

[Fig. 2]

[Fig. 3]

[Fig. 4]

[Fig. 5]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20210115284 A
- US 2018222486 A1
- GB 2587739 A